# FASCICULE DE BREVET EUROPEEN

(11) **EP 3 189 737 B1**
(45) Date de publication et mention de la délivrance du brevet: **15.05.2019**
(21) Numéro de dépôt: 17150430.1
(22) Date de dépôt: 05.01.2017
(51) Int. Cl.: B65B 25/00, B65B 31/02, B65B 55/06, B65B 55/02, B65B 55/10, B65B 55/14, B65B 7/28

(54) **PROCÉDÉ CONTINU ET SYSTÈME DE DISPOSITIFS POUR LA PASTEURISATION OU LA STÉRILISATION DE DENRÉES ALIMENTAIRES DANS UN CONTENEUR RIGIDE SUIVIE DE SA FERMETURE SOUS VIDE PROFOND PAR INJECTION DE VAPEUR ROTATIVE ET REFROIDISSEMENT RAPIDE HOMOGENE**
KONTINUIERLICHES VERFAHREN UND SYSTEM VON VORRICHTUNGEN FÜR DIE PASTEURISIERUNG ODER STERILISIERUNG VON LEBENSMITTELN IN EINEM STARREN BEHÄLTER, GEFOLGT VON DESSEN VAKUUMVERSCHLUSS DURCH ROTATIVE DAMPFEINSPRITZUNG UND HOMOGENE SCHNELLE KÜHLUNG
CONTINUOUS METHOD AND SYSTEM OF DEVICES FOR PASTEURISING OR STERILISING FOODSTUFFS IN A RIGID CONTAINER FOLLOWED BY DEEP-VACUUM SEALING OF SAME BY ROTARY STEAM INJECTION AND UNIFORM RAPID COOLING

(30) Priorité: 07.01.2016 FR 1650122
(43) Date de publication de la demande: 12.07.2017
(73) Titulaire: Sodetech, 33260 La Teste de Buch (FR)
(72) Inventeur: LARROCHE, Jean, 47300 PUJOLS (FR); LARROCHE, Brigitte, 75020 PARIS (FR)
(74) Mandataire: Ipside

(56) Documents cités:
- EP-A1- 0 163 340
- EP-A1- 2 226 252
- EP-A1- 2 357 136
- FR-A- 1 130 043
- FR-A1- 2 385 607
- US-A1- 2009 320 415

## Description

### Domaine de l'invention

La présente invention se rapporte au domaine de l'agroalimentaire, et plus particulièrement à l'emballage de denrées alimentaires en conteneur rigide.

La présente invention concerne plus particulièrement un procédé et un système, tels que définis dans les revendications, pour la stérilisation ou la pasteurisation en continu des denrées suivie de la fermeture sous vide profond en continu dudit conteneur pour une conservation sous vide profond durable des aliments dans des conditions de qualité organoleptique et nutritive exceptionnelles, grâce à une réduction drastique des temps de refroidissement des conteneurs après stérilisation. Elle met en oeuvre l'usage d'un conteneur particulier, prévu pour être fermé sous vide profond. Elle est adaptée aux produits pâteux ou liquides ou en morceaux inclus dans un appareil liquide ou pâteux.

Dans la suite du présent document, on convient de désigner par « conteneur » l'ensemble formé par un « récipient » et son « couvercle ».

### Etat de la technique

Historiquement importantes, les pratiques d'appertisation sont progressivement remplacées pour partie par la surgélation, en lien avec les inconvénients organoleptiques et nutritionnels de la sur-cuisson née du fait qu'on ne peut refroidir assez rapidement les conserves après leur stérilisation. Des progrès ont néanmoins été réalisés avec l'emballage métallique sous vide, certes avec des niveaux de vide limités.

Le brevet américain N° US 1 931 911 décrit un procédé de conditionnement sous vide de produits alimentaires dans un conteneur fermé par un couvercle dépourvu de moyens d'accrochage. Ce procédé est inadapté à une production continue en série.

Le brevet français N° FR 2 385 607 décrit un procédé dans lequel est injectée de la vapeur entre le couvercle et le récipient, puis le conteneur fermé est introduit dans un autoclave mis en surpression par injection d'air comprimé pendant la pasteurisation ou stérilisation, pour être après refroidi progressivement et remis à la pression atmosphérique. Hélas, le mélange d'air et de vapeur étant hétérogène, la température dans l'autoclave l'est également. D'autre part, ce procédé ne permet pas d'évacuer suffisamment l'oxygène du conteneur. Enfin, le temps de stérilisation nécessaire pour obtenir la sécurité de conservation amène obligatoirement à une cuisson excessive du produit aggravée par le trop lent refroidissement que préconise le texte et qui amènerait à une dégradation du produit par caramélisation des sucres ou/et dégradation des goûts et de la couleur par la réaction de Maillard.

Le brevet français N° FR 2 686 059 a recours aux mêmes procédé et moyens que le brevet mentionné au paragraphe précédent, et est sujet aux mêmes impossibilités et inconvénients.

Le brevet européen N° EP 0 019 646 (SCHWERDTEL) propose une installation pour la fermeture sous vide de boites avec couvercle qui comprend une première étape de blocage du couvercle sur le débouché de la boîte par le vide obtenu dans une enceinte et une deuxième étape, dans une autre enceinte, de sertissage du couvercle. Cependant, le document EP 0 019 646 (SCHWERDTEL) n'aborde pas l'utilisation du vide profond dans le processus de conservation et s'intéresse à la réinjection de gaz.

On connaît également le brevet d'invention N° EP 2 106 219 qui décrit un système et procédé d'emballage qui reprend les éléments d'un brevet précédent EP0715587 et permet l'emballage sous vide de produits alimentaires aqueux dans un récipient rigide scellé par un couvercle flexible. Le récipient est chauffé dans un vide partiel afin d'amener le liquide à ébullition pour que la vapeur générée expulse les autres gaz du récipient à travers l'ouverture non scellée, puis le récipient est scellé. Malheureusement, compte tenu du dégagement chaotique des gaz, il reste toujours un peu d'air et le vide profond n'est pas atteint, la meilleure preuve étant que ce procédé ne nécessite pas un conteneur très rigide, comme le dit clairement la version du brevet précédente EP0715587.

Le brevet français N° FR 2 829 106, par les inventeurs de la présente invention, permet effectivement d'atteindre un vide profond et s'applique à des conteneurs de résistance au vide très importante, tels que les conteneurs décrits par les mêmes inventeurs dans le brevet. Cependant, le procédé décrit nécessite le passage des conteneurs par une phase de stérilisation ou de pasteurisation après mise sous vide.

Le brevet européen N° EP 2 226 252 décrit un procédé pour le conditionnement en continu sous vide de produits alimentaires pasteurisés et/ou stérilisés. Cependant, ce brevet européen reste imprécis sur le niveau de vide atteint puisqu'il stipule exactement que le niveau de vide atteint ne doit pas dépasser 950 mbar pendant tout le procédé et ne précise pas comment on peut atteindre ni si on peut atteindre un tel niveau de vide, ni comment on peut garantir le transfert stérile entre les appareils de préparation des aliments et l'emboitage.

Enfin, le brevet européen N° EP 2 357 136 décrit une tête d'injection vapeur et eau froide pour la réalisation de conditionnement sous vide en continu de produits alimentaires qui peuvent être stérilisés ou pasteurisés dans un récipient rigide tel que celui décrit dans le brevet EP 2 226 252. Le brevet EP 2 357 136 décrit aussi un procédé d'utilisation de la dite tête dans lequel le récipient reçoit un produit préparé prêt à la consommation, préalablement dégazé, pasteurisé ou stérilisé à haute température.

Malheureusement, les jets de vapeur proposés dans le document EP 2 357 136 sont désordonnés et ne réussissent pas à chasser tout l'air des zones requises, le brevet EP 2 357 136 mentionnant un vide relatif proche de 850 mbar, ce qui représente 100 mbar de moins que la performance que propose la présente invention, soit un abaissement de la température d'ébullition dans le conteneur fermé sous vide profond de 55°C à 37°C, soit un allongement considérable de la plage d'ébullition donc de refroidissement rapide du produit lié à la chaleur latente d'évaporation/condensation de l'eau. Le brevet EP 2 357 136 ne précise pas non plus comment on peut garantir le transfert stérile entre les appareils de préparation des aliments et l'emboitage.

En améliorant les inventions objets des brevets européens EP 2 226 252 et EP 2 357 136, les mêmes inventeurs proposent des moyens qui résolvent les problèmes énoncés précédemment en améliorant le dégazage des produits et donc le niveau de vide pour raccourcir le temps total de cuisson, et proposent d'autre part des moyens pour garantir la stérilité des produits tout au long du procédé, et pour obtenir un refroidissement rapide et homogène.

Aucun des brevets précédemment cités ne permet de procéder à une fermeture sous vide profond après pasteurisation ou stérilisation, ce qui a pour effet d'ajouter à la cuisson initiale des plats cuisinés une seconde cuisson assez destructrice suivie d'un refroidissement trop long pendant lequel la cuisson continue tant que la température n'est pas redescendue sous 68°C à coeur du produit, ce qui rend impossible le conditionnement de certains produits pâteux au-delà de petites contenances, comme les purées et notamment les purées de légumes fragiles qui, après stérilisation en autoclave, subissent une caramélisation au niveau du centre des boîtes, voire un brunissement et une destruction des vitamines et des arômes contenus dans les produits.

On définit ici le vide profond comme un niveau de pression partielle absolue d'oxygène d'au plus 10 mbar à l'intérieur du conteneur mesurée à 4°C. Pour garantir ce niveau de vide au bout de trois ans, il est indispensable que la mise sous vide initiale se fasse progressivement pour éviter l'éclatement des cellules dans les aliments et permette d'atteindre 5mbar de pression partielle absolue d'oxygène à l'intérieur du conteneur à l'issue du procédé, mesurée à température ambiante.

On peut raccourcir considérablement les temps de chauffage et de refroidissement des aliments conditionnés en utilisant les transferts de chaleur permis par la chaleur latente de vaporisation/condensation de l'eau qui représente 2269 kjoule par gramme d'eau vaporisée ou condensée soit 542 kcal par gramme d'eau vaporisée ou condensée.

### Exposé de l'invention

La présente invention a pour objet un procédé et un système de dispositifs, tels que définis dans les revendications, pour la stérilisation ou la pasteurisation des denrées suivie de la mise sous vide et de la fermeture sous vide profond du dit conteneur pour une conservation sous vide durable des aliments dans des conditions de qualité organoleptique et nutritive exceptionnelles. Elle met en oeuvre l'usage d'un conteneur particulier, prévu pour être fermé sous vide profond sans autre moyen de fixation du couvercle au récipient que le vide tels que ceux présentés dans le brevet EP2502685 - « Procédé de formage de la paroi de l'embouchure d'un récipient ou emballage métallique, dispositif à cet effet et emballage ou récipient obtenu ». Ces conteneurs présentent un joint élastique en périphérie du couvercle sur sa face inférieure.

Elle est adaptée aux produits pâteux ou liquides ou en morceaux inclus dans une composition liquide ou pâteuse.

La présente invention, en mobilisant divers matériels existants indispensables et en introduisant des modifications de dispositifs, des associations de dispositifs et des opérations nouvelles, permet une conservation durable des aliments sous vide profond dans un conteneur rigide en atteignant une pression absolue inférieure à 24mbar au moins immédiatement après mise en conserve et refroidissement à 4°C, ce qui représente un abaissement de la température d'ébullition de l'eau à 26°C dans le conteneur et donc un allongement de la plage dans laquelle on peut bénéficier des avantages du changement de phase et de la chaleur latente de l'eau (2269 kjoule/g ou 542 kcal/g à l'ébullition), la chaleur latente restant relativement constante dans le domaine de pression considéré, d'un allongement de la durée de protection des denrées de l'oxygène avec une garantie qu'il reste une pression partielle d'oxygène absolue résiduelle inférieure à 10mbar au bout de 3 ans, temps maximum habituel de stockage des conserves.

La présente invention propose dans sa généralité d'augmenter le niveau de vide dans le conteneur et d'exploiter ce vide profond non seulement pour provoquer le refroidissement très rapide des aliments après fermeture, mais aussi pour mieux conserver les aliments, et enfin pour améliorer le maintien du couvercle à son débouché.

Ces modalités prévoient notamment de provoquer une pression différentielle initiale entre l'intérieur du conteneur et la pression atmosphérique, au moins de l'ordre de 980 mbar, quand la pression atmosphérique est à 1014mbar, en mettant le conteneur brutalement sous vide par injection de vapeur surchauffée, fermeture hermétique, puis douche froide appliquée sur un conteneur rempli de manière stérile au préalable.

Avec le procédé objet de l'invention, on obtient une meilleure conservation aux substances alimentaires de leurs éléments, tels que les vitamines, les arômes et les matières grasses, qui n'ont pas à subir l'altération de l'oxygène résiduel habituellement contenu dans les produits emballés par les techniques antérieures.

Ce procédé permet, sur des produits liquides, pâteux ou en morceaux avec sauce, en particulier les plats cuisinés, de réduire considérablement le temps de refroidissement après fermeture, grâce au fait que tous les échanges de chaleur se passent en pression de vapeur saturante, et que l'on profite donc des changements de phase liquide / vapeur (chaleur latente de vaporisation/condensation de l'eau = 2269 kjoule/g 542 kcal/g) qui accélèrent les transferts de chaleur entre les aliments, les parois de la boîte et l'autoclave de stérilisation.

A cet effet, la présente invention concerne, dans son acception la plus générale, un procédé pour la pasteurisation ou la stérilisation en continu sous vide profond, de produits alimentaires, dans un conteneur rigide, la fermeture de la partie récipient dudit conteneur devant s'effectuer par un couvercle métallique exempt de moyens d'accrochage et pourvu d'un joint élastique qui assure une liaison entre le récipient et le couvercle grâce au vide, comportant les étapes suivantes :
- Dégazage du produit prêt à conditionner ;
- Pasteurisation ou stérilisation du produit ;
- Refroidissement du produit pour atteindre la température de remplissage ;
- Stérilisation et dégazage initial des récipients, puis transfert des dits récipients sous une première enceinte, sans rupture de stérilité ni introduction de gaz incondensables ;
- Une étape au cours de laquelle le produit est amené, dosé et rempli dans les récipients sous une première enceinte maintenue en atmosphère de vapeur surchauffée, le remplissage cessant lorsqu'on atteint environ le dernier centimètre du récipient, de façon à laisser un espace adapté, d'un volume suffisant pour que le moment venu et dans certaines conditions, la condensation de la vapeur surchauffée permette d'obtenir le vide objectif ;
- Sortie du récipient rempli d'aliments et de vapeur de ladite première enceinte et entrée dudit récipient rempli d'aliments et de vapeur sous une seconde enceinte isolée, également maintenue en atmosphère de vapeur surchauffée où le récipient est positionné dans l'attente de son couvercle ;
- Une étape au cours de laquelle les couvercles issus d'un magasin tubulaire de distribution, après avoir été au préalable désinfectés ou étant désinfectés pendant la distribution, sont séparés et, après que leur joint ait été éventuellement amolli, sont introduits dans la seconde enceinte et déposés chacun sur un récipient rempli d'aliments, les dits couvercles croisant sur leur route un courant de vapeur surchauffée sortant de la seconde enceinte vers le magasin de distribution des couvercles ;
- Une étape au cours de laquelle chaque couvercle est soulevé de son récipient pour injecter entre eux de la vapeur surchauffée ;
- Une étape au cours de laquelle le récipient et le couvercle sont pressés l'un contre l'autre pour mettre en contact le joint souple du couvercle avec le bord arrondi de l'embouchure du récipient, cette fermeture permettant d'isoler complètement de l'extérieur un espace nommé ici « chambre à vide »;
- Arrêt de l'injection vapeur et douche d'eau froide du couvercle du récipient pour le refroidir et assurer la condensation de la vapeur située dans la chambre à vide, ce qui provoque alors une dépression dans le conteneur par rapport à la pression atmosphérique, dépression suffisante pour garantir que le récipient et le couvercle soient solidement joints ; et
- Evacuation du conteneur sous vide vers un tunnel de refroidissement où se continue le refroidissement jusqu'à ce que la température ait atteint la température ambiante, la douche froide devant se continuer aussi longtemps que la température dans le produit n'a pas baissé en dessous de la température de cuisson des aliments située vers 68°C.
sachant que les dégazages assurés aux moments de la stérilisation des récipients, du remplissage du récipient et de sa fermeture se font par injection de vapeur surchauffée à plus de 130°C en imposant un mouvement rotatif de la vapeur dans les espaces concernés, de type tourbillon ou vortex, capables d'éliminer toute trace d'air en un temps très limité et de le remplacer exclusivement par de la vapeur surchauffée capable, lors de son refroidissement et de sa condensation, de provoquer la mise du conteneur sous le dit vide profond, la vapeur étant injectée à une température, un débit et pendant un temps adaptés pour permettre la stérilisation des zones concernées.

De préférence, ledit procédé comporte en outre une étape d'injection de vapeur surchauffée dans les récipients vides avant leur remplissage pour améliorer encore le dégazage en évitant l'emprisonnement de bulles d'air au dessous des produits pâteux lors de leur remplissage.

Avantageusement, ledit procédé comporte plusieurs étapes consistant à éliminer toutes les sources possibles de gaz incondensables, depuis la préparation du produit jusqu'à la fermeture du conteneur, y inclus au moment du remplissage des récipients, de manière à garantir à terme un vide profond dans le dit conteneur.

Selon un mode de réalisation, la stérilisation et les dégazages assurés aux moments de la stérilisation des récipients, du remplissage du récipient et de sa fermeture se font par injection de vapeur surchauffée à plus de 130°C en imposant un mouvement rotatif de la vapeur dans les espaces concernés, de type tourbillon ou vortex, capables d'éliminer toute trace d'air en un temps très limité et de le remplacer exclusivement par de la vapeur surchauffée capable lors de son refroidissement et de sa condensation, de provoquer la mise du conteneur sous ledit vide profond, la vapeur étant injectée à une température, un débit et pendant un temps adaptés pour permettre la stérilisation des zones concernées.

Avantageusement, la stérilisation et le dégazage initial des récipients se font par présentation des récipients, ouverture en bas, et injection de vapeur surchauffée dans l'intérieur du récipient, l'opération devant alors se produire à l'air libre de manière à ce que l'air puisse s'échapper du récipient et que la vapeur surchauffée, plus légère que l'air, reste piégée dans le récipient. Dans ce cas, une opération de retournement du récipient intervient préalablement à son remplissage, ce retournement devant se faire sous enceinte isolée maintenue en légère surpression de vapeur surchauffée.

Selon un mode de réalisation, ledit procédé comporte une étape de création en continu dans les conteneurs conditionnés des conditions thermodynamiques nécessaires pour que tous les échanges de chaleur dans le conteneur se passent au point d'ébullition et de condensation, permettant d'exploiter la chaleur latente de vaporisation de l'eau pour évacuer la chaleur du conteneur.

Avantageusement, ledit procédé met en oeuvre une ébullition homogène du produit, ladite ébullition étant normale pour les matières contenant de l'eau et placées sous le vide envisagé, ce qui permet d'imposer en continu un refroidissement homogène des aliments dans les conteneurs déjà fermés.

La présente invention se rapporte également à un système pour la pasteurisation ou la stérilisation en continu sous vide profond, de produits alimentaires, comportant :
- des moyens de dégazage du produit en vrac, ces moyens pouvant être soit un système de mise sous vide, soit un système de cuisson induisant naturellement le dégazage, soit une cuisson sous vide ;
- des moyens de stérilisation et de dégazage initial des récipients ;
- des moyens de stérilisation et de refroidissement du produit en vrac, le dit moyen de refroidissement étant placé en sortie du dit moyen de stérilisation ;
- des moyens de séparation, de désinfection des couvercles, utilisant la vapeur surchauffée comme moyen de désinfection, cette vapeur induisant un dégazage de l'environnement du couvercle, qui contribue au dégazage de l'ensemble du système, et un amollissement éventuellement nécessaire des joints des couvercles ;
- des moyens de remplissage permettant éventuellement l'évacuation des gaz incondensables dans le récipient, et permettant dans tous les cas le dosage et le remplissage stérile des aliments dans le récipient, lesdits moyens de remplissage pouvant être installés en série sur une chaîne de remplissage ;
- des moyens permettant à la fois la manipulation des couvercles, l'injection de vapeur, la fermeture des récipients remplis d'aliments et le refroidissement des conteneurs par douche froide, moyens également nommés « tête de fermeture » ;
- une première enceinte, située en amont de tout le système de fermeture sous vide et incluant des moyens de positionnement des récipients ainsi qu'une chaîne de remplissage, la dite enceinte devant être maintenue en état de stérilité optimale par l'injection initiale de vapeur surchauffée dès le début de processus, puis maintenue sous vapeur par une légère surpression de vapeur qui impose un courant sortant de l'enceinte vers l'atmosphère libre, tout ceci obligeant à installer des jupes souples à l'entrée de l'enceinte pour éviter le passage d'air ;
- une seconde enceinte également placée sous légère surpression de vapeur dans les mêmes conditions, cette enceinte incluant tout le secteur d'échange de couvercles et de récipients remplis entre des premier, second et troisième et quatrième carrousels, la vapeur s'échappant de la dite seconde enceinte uniquement par l'entrée des couvercles au niveau du magasin tubulaire et par l'entrée du premier carrousel et la sortie du quatrième, tout ceci obligeant à installer des jupes souples à l'entrée et à la sortie de la dite seconde enceinte pour
- éviter le passage d'air, et à raccorder la dite seconde enceinte à la dite première enceinte de manière hermétique sans possibilité d'entrée d'air,
- des moyens de transfert des récipients entre les autres moyens qui garantissent le maintien du dégazage et de l'état stérile des produits et récipients ;
- des moyens de freiner l'entrée d'air dans les enceintes sous vapeur surchauffée ;
- des moyens assurant la création de tourbillons ou vortex de vapeur à trois reprises : lors de la stérilisation des conteneurs, juste avant le remplissage, et avant la fermeture, grâce à une orientation de becs injecteurs de vapeur vers le bas et de manière tangentielle par rapport à la paroi du récipient, lesdits becs injecteurs de vapeur se trouvant sur lesdits moyens de remplissage, et sur ladite tête de fermeture.

### Brève description des dessins

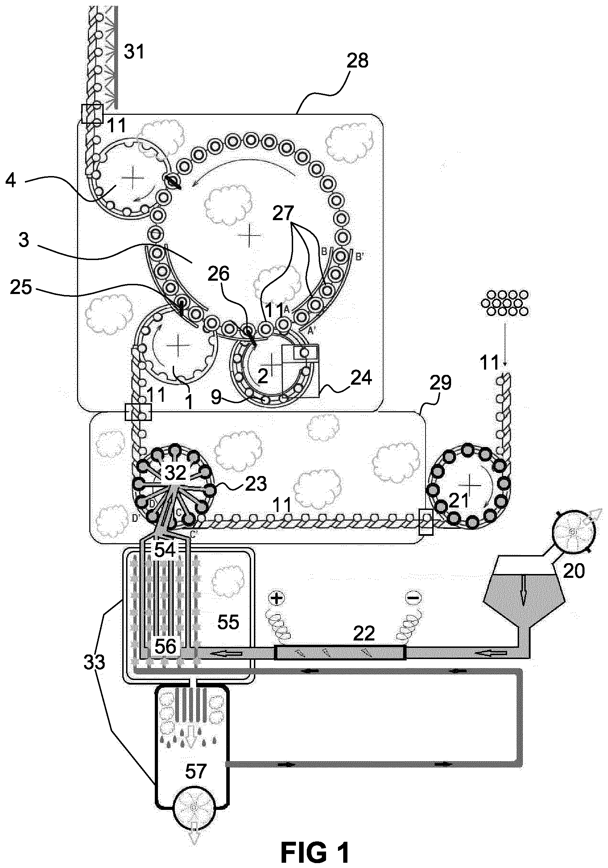

On comprendra mieux l'invention à l'aide de la description, faite ci-après à titre purement explicatif, d'un mode de réalisation de l'invention, en référence aux Figures dans lesquelles :
- En Figure 1 est représenté tout le système de dispositifs nécessaires à la mise en oeuvre de la présente invention ;
- La Figure 2 est une vue schématique de l'installation de carrousels du système de dispositifs mettant en oeuvre l'enchaînement des opérations de fermeture du récipient selon l'invention;
- La Figure 3 représente une vue schématique de la « tête de remplissage», avec la représentation symbolique du tourbillon ou vortex de vapeur induit par son fonctionnement ;
- La Figure 4 est une vue schématique de la « tête de fermeture » qui permet la mise en place des couvercles sur le conteneur, leur fermeture après injection rotative de vapeur, la douche froide des conteneurs et leur refroidissement ;
- Les Figures 5 et 7 représentent des coupes axiales de la tête de remplissage présentée en Figure 3, avec respectivement, la configuration avec le tourbillon ou vortex de vapeur induit et le mouvement des aliments ;
- Les Figures 6 et 8 représentent des coupes axiales de la tête de fermeture présentée en Figure 4, dans deux plans de coupe décalés angulairement ;
- Les Figures 9 et 11 représentent une coupe et un schéma du mandrin de la tête de remplissage présentée en Figure 3.
- Les Figures 10 et 12 représentent une coupe du mandrin de la tête de fermeture présentée en Figure 4, respectivement en position haute et basse.
- La Figure 13 représente la circulation de la vapeur dans le mandrin de la tête de remplissage présentée en Figure 3.
- La Figure 14 représente la couronne annulaire de la tête de fermeture présentée en Figure 4.
- La Figure 15 représente la circulation de la vapeur et de l'eau glacée dans le mandrin de la tête de fermeture présentée en Figure 4.

### Description détaillée de modes de réalisation de l'invention

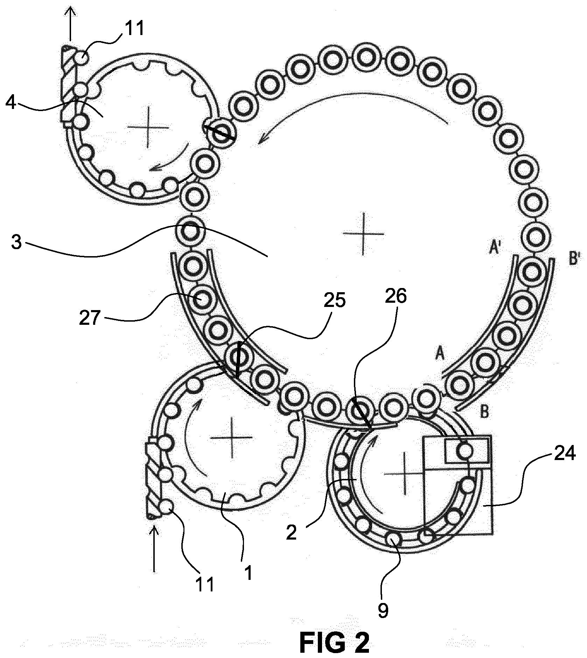

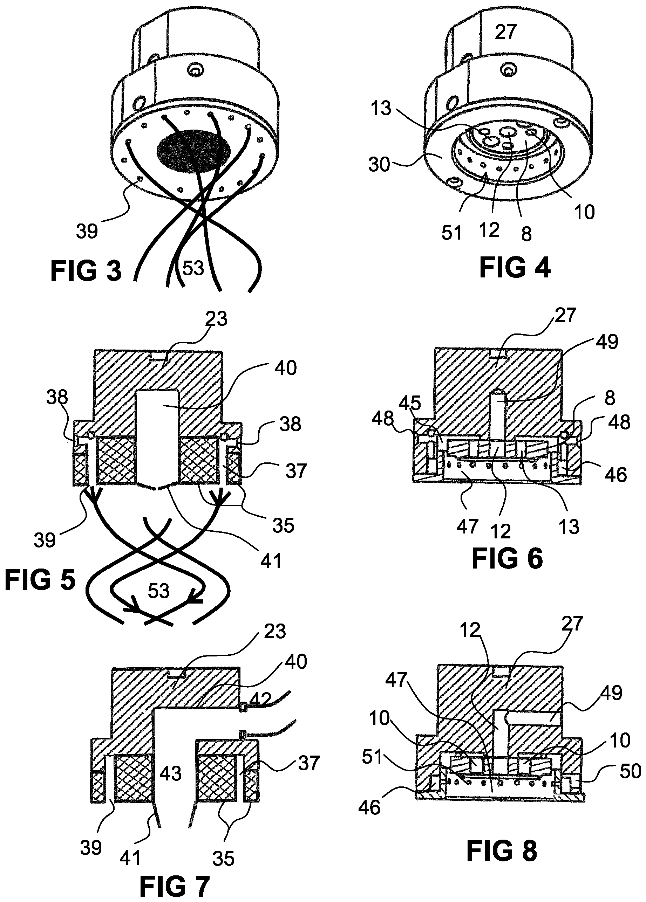

Les dispositifs nécessaires (représentés en Figure 1) à la mise en oeuvre de la présente invention sont les suivants :
- un premier dispositif 20 (FIG 1) de dégazage des produits, ce dispositif étant par exemple un système de mise sous vide ou un système de cuisson induisant naturellement le dégazage ;
- un dispositif 21 (FIG 1) de stérilisation, de dégazage et de positionnement des récipients, ce dispositif utilisant par exemple du peroxyde d'hydrogène, de la vapeur surchauffée ou des rayons UV, le dit dispositif aboutissant sans rupture de stérilité ni retour d'air dans l'intérieur des récipients à une chaine de transfert, éventuellement capable de retourner les récipients s'ils ont été introduits tête en bas, la dite chaine de transfert entrant dans une enceinte isolée 29, contigüe à une autre enceinte 28 où se déroule une partie des opérations ;
- un dispositif 22 (FIG 1) de stérilisation ou de pasteurisation des aliments. Ce dispositif est composé d'un tube ohmique ou d'un tube chauffant à surfaces raclées, ce dernier tel que ceux qu'on utilise dans l'industrie du concentré de tomates pour tous les produits à pasteuriser, ou de tout autre système qui aurait permis d'obtenir une stérilisation ou une pasteurisation du produit, tous ces systèmes étant nécessairement sous pression, l'avantage du tube ohmique étant qu'il permet de réduire le temps de cuisson pendant le chauffage du produit tout en optimisant le temps de stérilisation ;
- un dispositif de refroidissement 33 (FIG 1) en sortie de stérilisation uniquement, destiné à amener le produit à la bonne température de remplissage le plus rapidement possible, à savoir entre 70 et 98°C sans lui faire perdre sa stérilité, ce dispositif pouvant être un système de multitubes plongés dans un bain ou sous une douche de refroidissement placée dans une enceinte à pression contrôlée ;
- une tête de remplissage 23 (FIG 1) permettant éventuellement de compléter le dégazage et la stérilisation du récipient, mais permettant surtout le dosage et le remplissage stérile des aliments dans le récipient à partir du dispositif 22 raccordé par un système de tuyauterie stérile. La « tête de remplissage» est aussi représenté en figure (FIG 3) dans une forme destinée au remplissage aseptique à chaud, induisant un mouvement particulier des jets de vapeur en tourbillon ou vortex, seule manière de venir à bout de l'air résiduel dans l'espace concerné, et comportant un circuit de distribution de produit et un bec de remplissage. La tête de remplissage 23 est installé en série sur une chaîne de remplissage 32 ;
- un dispositif de carrousels 1, 2, 3 (FIG 1 et FIG 2), le premier carrousel 1 permettant de cadencer la remise des récipients remplis sur le troisième carrousel 3 pendant que le second carrousel 2 permet de cadencer la remise des couvercles au troisième carrousel 3 ;
- un dispositif 24 (FIG 1) d'introduction, de séparation, de désinfection des couvercles 9 (FIG 2) portés en série par le carrousel 2 (FIG 1 et FIG 2) et alimenté par un magasin tubulaire, ce magasin étant placé de fait dans un courant de vapeur sortant de l'enceinte 29;
- un dispositif 25 (FIG 2) de transfert des récipients remplis d'aliments depuis le premier carrousel 1 (FIG 1 et FIG 2) au troisième carrousel 3 (FIG 1 et FIG 2) ;
- un dispositif 26 (FIG 2) de transfert des couvercles du carrousel 2 (FIG 1 et FIG 2) au carrousel 3 (FIG 1 et FIG 2) ;
- une tête de fermeture 27 (FIG 1 et FIG 2) permettant à la fois la manipulation des couvercles, l'injection de vapeur rotative, la fermeture des récipients remplis d'aliments et le refroidissement des conteneurs par douche froide, aussi représenté en FIG 4 en détail, le dit dispositif étant porté en série par un troisième carrousel 3 (FIG 1 et FIG 2), ladite tête de fermeture 27 comprenant un mandrin 8 (FIG 4) portant des moyens magnétiques 10 (FIG 4), ladite tête de fermeture comportant en outre des moyens pour induire un mouvement particulier des jets de vapeur en tourbillon ou vortex, afin de venir à bout de l'air résiduel dans l'espace concerné ;
- un carrousel 4 (FIG 1 et FIG 2) d'évacuation des récipients enfin fermés vers une zone de refroidissement 31 (FIG 1 et FIG 2) .
- une enceinte 28 (FIG1 et FIG 2) maintenue en état de stérilité optimale par l'injection initiale de vapeur surchauffée en début de process, puis maintenue sous vapeur, le tout par tout moyen d'injection de vapeur approprié, cette enceinte incluant tout le secteur d'échange de couvercles et de récipients remplis entre les carrousels 1, 2, 3, 4 (FIG 1 et FIG 2), la vapeur s'échappant uniquement en hauteur par l'entrée des couvercles au niveau du magasin tubulaire du dispositif 24 et par l'entrée et la sortie situées au voisinage des carrousels 1 et 4 (FIG 1 et 2), ces carrousels 1 et 4 étant entièrement inclus dans l'enceinte 28, des jupes souples placées à l'entrée et à la sortie de l'enceinte 28 limitant le passage d'air ;
- une enceinte 29 (FIG 1 et FIG 2), située en amont de tout le système de fermeture sous vide et incluant la chaîne de transfert et la chaîne de remplissage 32, et donc située juste avant l'entrée des récipients dans l'enceinte 28, et lui étant raccordée de manière hermétique, la dite enceinte 29 subissant en début de processus un courant de vapeur sortant de l'enceinte 28 pour la purger de son air, puis étant mise également sous légère pression de vapeur surchauffée sortant donc vers l'atmosphère libre au niveau du dispositif 21, des jupes souples à l'entrée de l'enceinte 29 limitant le passage d'air ;

La Figure 3 représente en détail la « tête de remplissage» 23 (FIG 1 et FIG 2) qui permet à la fois un dégazage et une désinfection complémentaires éventuels des récipients et le remplissage stérile des récipients avec les aliments stérilisés ou pasteurisés.

La figure (FIG 4) représente en détail la « tête de fermeture» 27 (FIG 1 et FIG 2) qui permet à la fois la mise en place des couvercles sur le conteneur, leur fermeture après injection rotative de vapeur et la douche des conteneurs avec de l'eau froide qui induit une condensation dans le conteneur et l'installation d'un vide relatif interne qui garantit le maintien en place du couvercle sur le conteneur. La tête de remplissage est caractérisée par une orientation particulière des becs d'injection de vapeur qui crée un mouvement de tourbillon ou vortex de vapeur dans le récipient, mouvement qui assure l'évacuation complète de l'air résiduel.

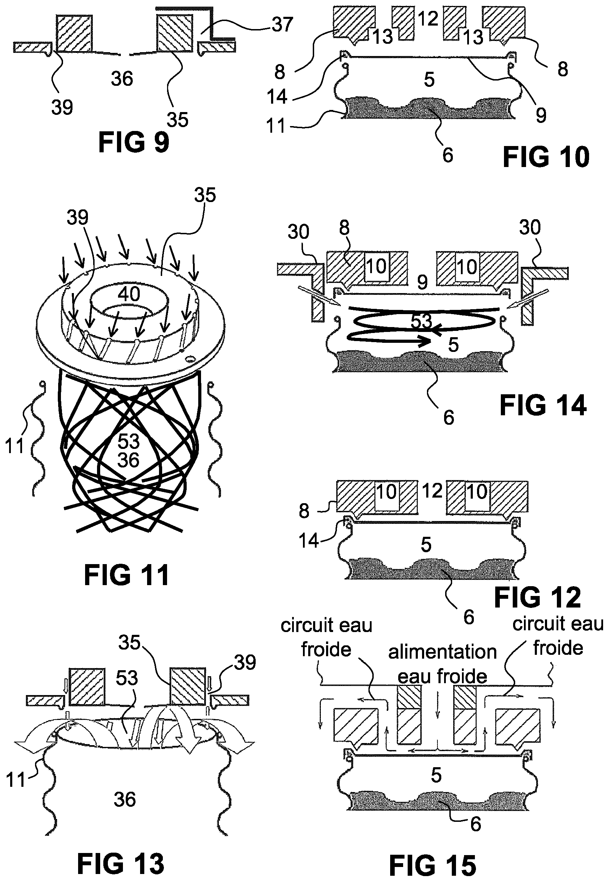

A l'aide de ces schémas, on peut mieux comprendre le procédé complet qui caractérise la présente invention et qui se déroule en continu selon les étapes suivantes comme il est décrit en Figure 1 et 2 :
(a) Le produit est préparé dans son état définitif stérile et il est dégazé, soit dans une opération séparée de cuisson, éventuellement sous vide, soit après cuisson, de manière continue dans une installation tubulaire avec vis sans fin raccordée en série ensuite au système de pasteurisation ou de stérilisation, soit en même temps qu'il est porté à température dans une installation de stérilisation ou de pasteurisation qui peut être soit un tube chauffant à surfaces raclées soit un tube ohmique, ou toute autre méthode qui permettrait d'amener le produit à conditionner à la bonne température de remplissage dans un état dégazé et cuit à point, le dit dégazage étant nécessaire pour accroître encore le niveau de vide en fin de procédé, la température de remplissage pouvant être de 90-92°C pour les produits pasteurisés, ce qui ne nécessite pas toujours de refroidissement, et en dessous de 98°C pour les produits déjà stérilisés, le refroidissement entre la sortie de stérilisation à 121°C et la température de remplissage devant se faire le plus rapidement possible pour avancer la fin de la cuisson du produit, le dit refroidissement pouvant être complet pour un remplissage aseptique à froid ou partiel pour un remplissage aseptique à chaud ;
(b) Une première stérilisation des récipients doit avoir lieu avant leur chargement sur la chaîne de remplissage 32 (FIG 1), soit avec du peroxyde d'hydrogène, de la vapeur surchauffée ou des rayons UV ou une combinaison de ces moyens, suivie d'un dégazage obligatoire, ce dernier devant se faire par injection de vapeur surchauffée à plus de 130°C dans les récipients, cette exposition à la vapeur surchauffée ayant lieu à l'air libre, afin que l'air contenu dans les récipients puisse s'échapper en dehors du système de conditionnement, et les dits récipients étant présentés ouverture vers le bas, de telle sorte que la vapeur, plus légère que l'air, ait tendance à rester dans le récipient,
(c) les récipients vides entrent alors, pleins de vapeur et ouverture vers le bas, dans l'enceinte 29 (FIG 1) placée sous atmosphère de vapeur surchauffée, par une chaîne de transfert sur laquelle ils sont alors retournés, ouverture vers le haut, puis apportés à la chaîne de remplissage 32 (FIG 1) où ils passent dans la zone CC'-DD' où une « tête de remplissage» 23 (FIG 1 et FIG 3, FIG 5, FIG 7) s'abaisse alors sur chaque récipient vide qui arrive de manière à laisser un espace libre entre la dite tête 23 et l'embouchure du récipient d'environ 5 à 10 mm et c'est alors qu'une vapeur surchauffée, par exemple à 120-135°C, peut éventuellement et à titre complémentaire, être injectée à l'intérieur du récipient par le dispositif d'injection de la « tête de remplissage» 23, l'injection étant rotative en se faisant de manière tangentielle aux parois du récipient vide et en biais, de manière à créer un tourbillon ou vortex de vapeur saturée puissant qui assure une élimination complète de l'air résiduel éventuel dans le récipient, ce qui est une solution pour éviter l'enfermement éventuel de poches d'air dans le produit par la suite ;
(d) par la « tête de remplissage » 23 (FIG 1), le produit est alors dosé dans les récipients 11 (FIG 1) sur la chaîne de remplissage 32 (FIG 1) située sous l'enceinte 29 (FIG 1),
(e) dans les cas de conditionnement de produits pasteurisés, le produit, qui est déjà à la température de remplissage, induit une pasteurisation complémentaire du récipient à 90°C-92°C ;
(f) le remplissage cesse lorsqu'on atteint environ le dernier centimètre du récipient, de manière à laisser en tête de récipient un espace suffisant sans produit, dit « chambre à vide » 5 (FIG 12), représentant environ 10 % de la hauteur du récipient, pour accueillir une quantité de vapeur suffisante pour garantir par la suite une condensation suffisante et un vide profond ;
(g) le récipient rempli d'aliments et de vapeur et donc totalement débarrassé de son air, quitte alors l'enceinte 29 et entre sous l'enceinte 28 (FIG 1) par une chaine de transfert sur le carrousel 1 (FIG 1 et FIG 2);
(h) puis ledit récipient rempli est transféré du carrousel 1 au carrousel 3 (FIG 2) par un mécanisme de transfert 25 (FIG 2) qui l'amène sur un socle de dépôt centré à la verticale sous une tête de fermeture 27 (FIG 2 et FIG 4, FIG 6, FIG 8) ;
(i) pendant que se déroulent simultanément les tâches précédentes, les couvercles 9 (FIG 2) issus d'un magasin tubulaire de distribution 24 (FIG 2), après avoir été au préalable désinfectés ou étant désinfectés pendant la distribution sont séparés et distribués un à un sur le second carrousel 2 (FIG 2) de telle sorte que n'entrent dans l'enceinte 28 (FIG 1) que des couvercles désinfectés et dont la gomme de joint peut avoir été éventuellement amollie par la vapeur en tant que de besoin ;
(j) le carrousel 2 remet un par un les couvercles 9 au carrousel 3 (FIG 2) par un mécanisme de transfert 26 (FIG 2), ceci se produisant sous l'enceinte stérile 28 en milieu de vapeur surchauffée et chacun de ces couvercles est déposé sur un récipient rempli d'aliments ;
(k) au dessus de chaque récipient couvert de son couvercle se trouve donc une tête de fermeture 27 (FIG 2 et FIG 4, FIG 6, FIG 8) en position relevée et pouvant encore contenir des traces d'air qui subit alors un dégazage complet par jet de vapeur surchauffée, et ce grâce à des circuits de vapeur intégrés dans la dite tête 27, qui débouchent au niveau de la partie basse de la dite tête de fermeture 27 ;
(l) le récipient rempli d'aliments et muni de son couvercle métallique, qui circule à ce moment sur le carrousel 3 (FIG 2) dans l'enceinte 28, est alors poussé vers le haut par un piston et son col est introduit dans la cloche que forme la tête de fermeture 27 (FIG 4), laquelle, sous l'action de ses moyens magnétiques 10 (FIG 4), soulève le couvercle qui se positionne alors sur le mandrin 8 (FIG 4), laissant entre le couvercle et le bord du récipient un espace de 5 à 10 mm de hauteur ;
(m) au passage du récipient dans la zone AA'-BB' du carrousel 3 (FIG 2), une vapeur surchauffée à 125°C est alors injectée entre le couvercle et l'embouchure du récipient rempli, grâce aux becs injecteurs de vapeur répartis autour de la partie basse de la tête de fermeture 27 (FIG 2 et FIG 4, FIG 6, FIG 8), de manière à créer un tourbillon ou vortex de vapeur surchauffée (FIG 14) qui assure une élimination complète des gaz présents entre le couvercle et le produit situé dans le récipient et leur remplacement par de la vapeur surchauffée,
(n) après l'injection de vapeur par la tête de fermeture 27 (FIG 2 et FIG 4, FIG 6, FIG 8), le récipient 11 et le couvercle sont pressés l'un contre l'autre par un piston, ceci mettant en contact le joint souple 14 (FIG 12) du couvercle 9 avec le bord arrondi de l'embouchure du récipient 11, cette fermeture permettant d'isoler complètement la «chambre à vide» 5 (FIG 14) de l'extérieur ;
(o) par le même mouvement de piston sont provoqués l'arrêt de l'injection vapeur et l'ouverture par la valve 49 (FIG 6) du circuit d'eau froide présent dans la tête de fermeture 27,
(p) la tête de fermeture 27 (FIG 2) étant alimentée en eau froide, cette eau s'écoule sur le mandrin 8 (FIG 4) qui porte les moyens magnétiques qui tiennent le couvercle 9, lequel mandrin est pourvu d'au moins un orifice d'entrée de l'eau 12 (FIG 4) et d'au moins un orifice de sortie latérale de l'eau 13 (FIG 4), ce qui permet d'inonder le couvercle 9 (FIG 14) d'eau froide et d'effectuer un premier refroidissement qui assure la condensation de la vapeur située dans la chambre à vide 5 (FIG 14), ce qui provoque alors une dépression partielle dans le conteneur par rapport à la pression atmosphérique, dépression suffisante pour garantir que le récipient et le couvercle soient solidement joints ;
(q) c'est alors seulement que le conteneur fermé peut éventuellement quitter l'enceinte 28 (FIG 1) et on poursuit le refroidissement par douche froide sur le couvercle 9 (FIG 14), la dépression provoquée est suffisante pour provoquer une ébullition uniforme dans tout le produit, ébullition qui provoque un refroidissement très rapide et uniforme dans tout le produit, la vapeur émise par la dite ébullition venant se condenser sur le couvercle refroidi par la douche froide, ce qui permet d'évacuer du conteneur 2269 kJoule par gramme d'eau évaporée/condensée ou 542 kcal par gramme d'eau évaporée/condensée ;
(r) le conteneur sous vide est alors évacué vers un tunnel de refroidissement 31 (FIG 1) par le carrousel 4 (FIG 1 et FIG 2) où se continue le même phénomène d'ébullition et de condensation jusqu'à ce que la température ait atteint la température ambiante, la douche froide devant se continuer aussi longtemps que la température dans le produit n'a pas baissé en dessous de la température de cuisson des aliments située vers 68°C, cette baisse de température étant homogène dans le produit et se produisant au moins 3 fois plus vite que dans un conteneur classique sans vide profond, pour le format 5kg, lorsque le produit a été convenablement dégazé au départ, et au moins 6 fois plus vite, pour le cas du format tambourin de 1,3kg.

Le procédé selon l'invention peut également être utilisé pour conditionner dans des récipients stériles un produit super propre préparé à partir d'ingrédients stériles et destiné à une distribution par la chaîne du froid sans pasteurisation ni stérilisation, avec remplissage aseptique à froid, à condition que le produit supporte en surface un balayage à la vapeur surchauffée. Dans ce cas, le vide atteint dépend du dégazage initial et des conditions d'injection de la vapeur et on ne peut pas compter sur le refroidissement du produit lui-même pour augmenter encore le vide final. Il faut donc augmenter la taille de la chambre à vide 5 (FIG 12) pour rendre la condensation plus importante et renforcer les opérations de dégazage et d'injection de vapeur tout au long du procédé sans pour autant porter préjudice au produit.

Pour le cas des produits stériles emballés à froids, il a été constaté que plus le produit serait froid dans le récipient, plus le débit de vapeur devrait être élevé.

Après leur fermeture et leur refroidissement partiel par la tête de fermeture 27 (FIG 1), les pots ou les boites remplis, maintenant fermés par un couvercle hermétique, sont alors évacués par le carrousel 4 (FIG 1) et avancent alors dans un tunnel de refroidissement 31 (FIG 1). Ce refroidissement provoque une condensation supplémentaire dans le conteneur fermé et une augmentation rapide du vide de manière homogène dans le conteneur. Cette baisse de pression homogène entraine une ébullition homogène du produit à basse température, le produit se refroidissant très rapidement du fait de cette ébullition qui consomme 542 kcal/g d'eau évaporée contenue dans le produit. La vapeur dégagée par cette ébullition fait augmenter de nouveau un peu la pression dans l'espace de tête, mais la dite vapeur se condense immédiatement de nouveau par contact avec le couvercle sur lequel coule l'eau de refroidissement du tunnel, ce qui recrée inexorablement plus de vide.

La descente de température dans le conteneur est beaucoup plus rapidement obtenue que par la conduction de chaleur, procédé classique utilisé dans l'industrie, ce qui permet de réduire le temps de refroidissement de 3 à 10 fois par rapport à un emballage classique, selon la taille des conteneurs, avec baisse de température homogène dans le conteneur, par exemple de 95°C à 68°C en 4 minutes dans un tambourin de 1,3 kg lorsque le vide est correctement fait, ce qui permet d'arrêter la cuisson, contrairement aux procédés classiques de refroidissement qui laissent le centre des conteneurs plus chauds et induisent la caramélisation de certains produits.

Après refroidissement suffisant, les pots ou boîtes peuvent passer par un tunnel de séchage à condition que la température de l'air soufflé et la durée d'exposition à cette température ne provoque pas un réchauffement du produit et une ébullition à température basse dans le conteneur. Ils sont alors prêts pour un regroupement et sur-conditionnement.

L'invention présentée améliore les performances des procédés et système de l'art antérieur, de la manière suivante :
- En ajoutant une phase de dégazage préalable du produit ;
- En créant des tourbillons ou vortex de vapeur une première fois pendant la stérilisation des conteneurs, une deuxième fois dans le récipient juste avant remplissage et une troisième fois juste avant la fermeture des récipients dans l'espace situé entre le couvercle et le produit à l'embouchure du récipient, ces tourbillons ou vortex étant permis par une nouvelle orientation des becs vers le bas et de manière tangentielle par rapport à la paroi du récipient, ce qui crée des couples de forces à même de favoriser la descente rotative de la vapeur dans les espaces considérés l'échappement rotatif total de l'air en dehors du conteneur, contrairement à toutes les méthodes en vigueur dans les industries alimentaires qui n'obtiennent qu'un déplacement chaotique de l'air et donc un dégazage partiel.
- En décrivant intégralement les systèmes de dispositif pour obtenir des performances nouvelles en termes de vide final dans le conteneur.
- En réduisant les temps de chauffage et de refroidissement de manière à minimiser les temps de cuisson sans porter préjudice à la stérilité des produits à terme.

Ce sont ces premières améliorations qui permettent de gagner environ 30 à 100 mbar de vide après refroidissement et d'abaisser la température d'ébullition dans le conteneur de 10°C à 20°C environ, avec comme conséquence un refroidissement encore accéléré pour une qualité de produit encore améliorée, notamment pour tous les produits contenant des matières grasses sensibles au rancissement, ce qui rend enfin possible le conditionnement de purées dans des conteneurs de format collectif (3 kg).

En outre, la présente invention ajoute au brevet précédent un système de dispositifs qui permet le transfert stérile entre les moyens de stérilisation/pasteurisation et l'emboitage, transfert qui n'était pas abordé de manière complète dans les précédents brevets.

## Revendications

1. Procédé pour la pasteurisation ou la stérilisation en continu sous vide profond, de produits alimentaires, dans un conteneur rigide, ledit conteneur étant un ensemble formé par un récipient et un couvercle, la fermeture de la partie récipient dudit conteneur devant s'effectuer par un couvercle métallique exempt de moyens d'accrochage et pourvu d'un joint élastique assurant une liaison entre le récipient et le couvercle grâce au vide, **caractérisé en ce qu'**il comporte les étapes suivantes :
• Dégazage du produit prêt à conditionner ;
• Pasteurisation ou stérilisation du produit ;
• Refroidissement du produit pour atteindre la température de remplissage ;
• Stérilisation et dégazage des récipients, une injection de vapeur surchauffée à plus de 130°C ayant lieu dans chaque récipient, puis transfert des dits récipients sous une première enceinte, sans rupture de stérilité ni introduction de gaz incondensables,
• Une étape au cours de laquelle le produit est amené, dosé et rempli dans les récipients sous ladite enceinte, le remplissage cessant lorsqu'on atteint environ le dernier centimètre du récipient, de façon à laisser un espace adapté, d'un volume suffisant pour que le moment venu et dans certaines conditions, la condensation de la vapeur surchauffée permette d'obtenir le vide objectif ;
• Sortie du récipient rempli d'aliments et de vapeur de ladite première enceinte et entrée dudit récipient rempli d'aliments et de vapeur sous une seconde enceinte isolée, également maintenue en atmosphère de vapeur surchauffée où le récipient est positionné dans l'attente de son couvercle ;
• Une étape au cours de laquelle les couvercles issus d'un magasin tubulaire de distribution, après avoir été au préalable désinfectés ou étant désinfectés pendant la distribution sont séparés, distribués, introduit dans la seconde enceinte et déposés chacun sur un récipient rempli d'aliments, les dits couvercles croisant sur leur route un courant de vapeur surchauffée sortant de la seconde enceinte vers le magasin de distribution des couvercles ;
• Une étape au cours de laquelle chaque couvercle est soulevé de son récipient pour injecter entre eux de la vapeur surchauffée, une injection de vapeur étant réalisée vers le bas et de manière tangentielle par rapport à la paroi du récipient ;
• Une étape au cours de laquelle le récipient et le couvercle sont pressés l'un contre l'autre pour mettre en contact le joint souple du couvercle avec le bord arrondi de l'embouchure du récipient, cette fermeture permettant d'isoler complètement de l'extérieur un espace nommé ici « chambre à vide »;
• Arrêt de l'injection vapeur et douche d'eau froide sur le couvercle du récipient pour le refroidir et assurer la condensation de la vapeur située dans la chambre à vide, ce qui provoque alors une dépression dans le conteneur par rapport à la pression atmosphérique, dépression suffisante pour garantir que le récipient et le couvercle soient solidement joints ;
• Evacuation du conteneur sous vide vers un tunnel de refroidissement où se continue le refroidissement, la douche froide devant se continuer aussi longtemps que la température dans le produit n'a pas baissé en dessous de la température de cuisson des aliments située vers 68°C ;
et **en ce que** les dégazages assurés aux moments de la stérilisation des récipients, du remplissage du récipient et de sa fermeture se font par injection de vapeur surchauffée à plus de 130°C en imposant un mouvement rotatif de la vapeur dans les espaces concernés, de type tourbillon ou vortex, capables d'éliminer toute trace d'air en un temps très limité et de le remplacer exclusivement par de la vapeur surchauffée capable, lors de son refroidissement et de sa condensation, de provoquer la mise du conteneur sous le dit vide profond, la vapeur étant injectée à une température, un débit et pendant un temps adaptés pour permettre la stérilisation des zones concernées.

2. Procédé selon l'une des revendications précédentes, **caractérisé en ce qu'**il met en oeuvre une ébullition homogène du produit, ce qui permet d'imposer en continu un refroidissement homogène des aliments dans les conteneurs déjà fermés.

3. Système pour la pasteurisation ou la stérilisation en continu sous vide profond, de produits alimentaires, **caractérisé en ce qu'**il comporte :
• des moyens (20) de dégazage du produit en vrac, ces moyens pouvant être soit un système de mise sous vide, soit un système de cuisson induisant naturellement le dégazage, soit une cuisson sous vide ;
• des moyens (21) de stérilisation et de dégazage des récipients utilisant au moins la vapeur surchauffée comme agent, cette vapeur induisant au moins un dégazage complet de l'intérieur du récipient,
• des moyens de stérilisation (22) et de refroidissement (33) du produit en vrac, le dit moyen de refroidissement étant placé en sortie du dit moyen de stérilisation ;
• des moyens (24) de séparation, de désinfection des couvercles, utilisant la vapeur surchauffée comme moyen de désinfection, cette vapeur induisant un dégazage de l'environnement du couvercle, qui contribue au dégazage de l'ensemble du système ;
• des moyens (23) de remplissage permettant éventuellement l'évacuation des gaz incondensables dans le récipient, et permettant dans tous les cas le dosage et le remplissage stérile des aliments dans le récipient, lesdits moyens (23) de remplissage pouvant être installés en série sur une chaîne de remplissage (32) ;
• des moyens (27) permettant à la fois la manipulation des couvercles, l'injection de vapeur, la fermeture des récipients remplis d'aliments et le refroidissement des conteneurs par douche froide, moyens également nommés « tête de fermeture » ;
• une enceinte (29), située en amont de tout le système de fermeture sous vide et incluant une chaîne de remplissage (32), et donc située juste avant l'entrée dans l'enceinte (28), et lui étant raccordée de manière hermétique sans possibilité d'entrée d'air, la dite enceinte (29) devant être sous légère surpression de vapeur surchauffée ;
• une enceinte (28) maintenue en état de stérilité optimale par l'injection initiale de vapeur surchauffée en début de processus, puis maintenue sous vapeur, cette enceinte incluant tout le secteur d'échange de couvercles et de récipients remplis entre des premier, second, troisième et quatrième carrousels (1, 2, 3, 4), la vapeur s'échappant uniquement en hauteur par l'entrée des couvercles au niveau du magasin tubulaire et par l'entrée et la sortie des premier et quatrième carrousels (1,4) ;
• des moyens de transfert des récipients entre les autres moyens qui garantissent le maintien du dégazage et de l'état stérile des produits et récipients ;
• des moyens de freiner l'entrée d'air dans les enceintes (28 et 29) sous vapeur surchauffée, comme par exemple des jupes souples placées aux issues des dites enceintes ;
et **en ce qu'**il comporte des moyens assurant la création de tourbillons ou vortex de vapeur à trois reprises : lors de la stérilisation des conteneurs, juste avant le remplissage, et avant la fermeture, grâce à une orientation de becs injecteurs de vapeur vers le bas et de manière tangentielle par rapport à la paroi du récipient, lesdits becs injecteurs de vapeur se trouvant sur lesdits moyens de remplissage (23), et sur ladite tête de fermeture (27).

## Patentansprüche

1. Verfahren zur kontinuierlichen Hochvakuum-Pasteurisierung oder Sterilisierung von Lebensmittelerzeugnissen in einem starren Behälter, wobei der Behälter ein von einem Gefäß und einem Deckel gebildetes Set ist, wobei das Verschließen des Gefäßteils des Behälters mit einem Metalldeckel erfolgen muss, der frei von Hakenmitteln und mit einer elastischen Dichtung versehen ist, die dank des Vakuums eine Verbindung zwischen dem Gefäß und dem Deckel sicherstellt, **dadurch gekennzeichnet, dass** es die folgenden Schritte umfasst:
- Entgasen des abpackfertigen Erzeugnisses;
- Pasteurisieren oder Sterilisieren des Erzeugnisses;
- Abkühlen des Erzeugnisses, um die Abfülltemperatur zu erreichen;
- Sterilisieren und Entgasen der Gefäße, wobei eine Einspritzung von auf mehr als 130 °C überhitztem Dampf in jeden Behälter stattfindet, anschließend Transferieren der Gefäße in ein erstes Gehäuse mit weder Unterbrechung der Sterilität noch Einführung von nicht kondensierbaren Gasen,
- einen Schritt, in dessen Verlauf das Erzeugnis zugeführt, dosiert und in die Gefäße im Gehäuse eingefüllt wird, wobei das Einfüllen stoppt, wenn etwa der letzte Zentimeter des Gefäßes erreicht wird, um einen geeigneten Raum mit einem Volumen zu belassen, das ausreicht, damit zum gegebenen Zeitpunkt und unter bestimmten Umständen das Kondensieren des überhitzten Dampfes ermöglicht, das gegenständliche Vakuum zu erhalten;
- Austreten des mit Lebensmitteln befüllten Gefäßes und von Dampf aus dem ersten Gehäuse, und Eintreten des mit Lebensmitteln befüllten Gefäßes und von Dampf in ein zweites isoliertes Gehäuse, das ebenfalls unter überhitzter Dampfatmosphäre gehalten wird, wo das Gefäß in Erwartung seines Deckels positioniert wird;
- einen Schritt, in dessen Verlauf die aus einem rohrförmigen Ausgabemagazin stammenden Deckel, nachdem sie zuvor desinfiziert wurden oder während des Ausgebens desinfiziert werden, getrennt, ausgegeben, in das zweite Gehäuse eingeführt und jeder auf ein mit Lebensmitteln befülltes Gefäß aufgesetzt werden, wobei die Deckel auf ihrem Weg einen Strom von überhitztem Dampf kreuzen, der aus dem zweiten Gehäuse zum Ausgabemagazin der Deckel hin austritt;
- einen Schritt, in dessen Verlauf jeder Deckel von seinem Gefäß abgehoben wird, um überhitzten Dampf zwischen dieselben einzuspritzen, wobei eine Einspritzung von Dampf nach unten und tangential zur Wand des Gefäßes ausgeführt wird;
- einen Schritt, in dessen Verlauf das Gefäß und der Deckel aneinandergepresst werden, um die nachgiebige Dichtung des Deckels mit dem abgerundeten Rand der Mündung des Gefäßes in Kontakt zu bringen, wobei dieses Verschließen ermöglicht, einen Raum, der hier als "Vakuumkammer" bezeichnet wird, vollständig von der Außenseite zu isolieren;
- Anhalten der Dampfeinspritzung und Duschen von kaltem Wasser auf den Deckel des Gefäßes, um denselben abzukühlen und das Kondensieren des in der Vakuumkammer befindlichen Dampfes sicherzustellen, was dann im Verhältnis zum Atmosphärendruck einen Unterdruck im Behälter bewirkt, Unterdruck, der ausreicht, um zu gewährleisten, dass das Gefäß und der Deckel fest zusammengefügt sind;
- Ausleiten des Vakuumbehälters zu einem Abkühltunnel, in dem sich das Abkühlen fortsetzt, wobei sich die kalte Dusche solange fortsetzen muss, wie die Temperatur im Erzeugnis nicht unter die Gartemperatur der Lebensmittel, die bei etwa 68 °C liegt, gesunken ist;
und dadurch, dass die Entgasungen, die zu den Zeitpunkten des Sterilisierens der Gefäße, des Befüllens des Gefäßes und dessen Verschließens sichergestellt werden, durch Einspritzung von auf mehr als 130 °C überhitztem Dampf unter Erzwingen einer Drehbewegung des Dampfes in den betreffenden Räumen vom Typ eines Strudels oder Wirbels geschehen, in einer sehr begrenzten Zeit jede Spur von Luft eliminieren und dieselbe ausschließlich durch überhitzten Dampf ersetzen können, der bei seinem Abkühlen und seinem Kondensieren das Hochvakuumieren des Behälters bewirken kann, wobei der Dampf mit einer Temperatur, einem Durchsatz und während einer Zeit eingespritzt wird, die geeignet sind, um das Sterilisieren der betreffenden Bereiche zu ermöglichen.

2. Verfahren nach einem der vorstehenden Ansprüche, **dadurch gekennzeichnet, dass** es ein homogenes Sieden des Erzeugnisses umsetzt, was es ermöglicht, kontinuierlich ein homogenes Abkühlen der Lebensmittel in den bereits verschlossenen Behältern zu erzwingen.

3. System zur kontinuierlichen Hochvakuum-Pasteurisierung oder Sterilisierung von Lebensmittelerzeugnissen, **dadurch gekennzeichnet, dass** es umfasst:
- Mittel (20) zum Entgasen des losen Erzeugnisses, wobei diese Mittel entweder ein Vakuumiersystem, oder ein Garsystem, das die Entgasung natürlicherweise hervorruft, oder ein Vakuumgaren sein können;
- Mittel (21) zum Sterilisieren und zum Entgasen der Gefäße unter Verwendung von mindestens dem überhitzten Dampf als Agens, wobei dieser Dampf mindestens ein vollständiges Entgasen des Innenraums des Gefäßes hervorruft,
- Mittel zum Sterilisieren (22) und zum Abkühlen (33) des losen Erzeugnisses, wobei das Abkühlmittel am Ausgang des Sterilisiermittels platziert ist;
- Mittel (24) zum Trennen, zum Desinfizieren der Deckel unter Verwendung des überhitzten Dampfes als Desinfektionsmittel, wobei dieser Dampf ein Entgasen der Umgebung des Deckels hervorruft, was zum Entgasen der Gesamtheit des Systems beiträgt;
- Mittel (23) zum Abfüllen, die gegebenenfalls das Ausleiten der nicht kondensierbaren Gase im Gefäß ermöglichen, und in allen Fällen das Dosieren und das sterile Abfüllen der Lebensmittel in das Gefäß ermöglichen, wobei die Abfüllmittel (23) an einer Abfülllinie (32) in Reihe installiert sein können;
- Mittel (27), die gleichzeitig das Handhaben der Deckel, das Einspritzen von Dampf, das Verschließen der mit Lebensmitteln befüllten Gefäße und das Abkühlen der Behälter durch kaltes Duschen ermöglichen, Mittel, die ebenfalls als "Verschlusskopf" bezeichnet werden;
- ein Gehäuse (29), das stromaufwärts des gesamten Vakuumverschlusssystems liegt und eine Abfülllinie (32) einschließt, und somit unmittelbar vor dem Eingang in das Gehäuse (28) liegt und hermetisch ohne Lufteintrittsmöglichkeit an dasselbe angeschlossen ist, wobei das Gehäuse (29) unter leichtem Überdruck von überhitztem Dampf stehen muss;
- ein Gehäuse (28), das durch die anfängliche Einspritzung von überhitztem Dampf zu Prozessbeginn in Zustand optimaler Sterilität gehalten wird, und anschließend unter Dampf gehalten wird, wobei dieses Gehäuse den gesamten Sektor zum Austauschen von Deckeln und von befüllten Gefäßen zwischen ersten, zweiten, dritten und vierten Karussellen (1, 2, 3, 4) einschließt, wobei der Dampf nur durch den Eingang der Deckel im Bereich des rohrförmigen Magazins und durch den Eingang und den Ausgang des ersten und vierten Karussells (1, 4) nach oben entweicht;
- Mittel zum Transferieren der Gefäße zwischen den anderen Mitteln, die das Halten der Entgasung und des sterilen Zustands der Erzeugnisse und Gefäße gewährleisten;
- Mittel zum Bremsen des Eintritts von Luft in die Gehäuse (28 und 29) unter überhitztem Dampf, wie zum Beispiel nachgiebige Schürzen, die an den Enden der Gehäuse platziert sind;
und dadurch, dass es Mittel umfasst, die das Erzeugen von Dampfstrudeln oder -wirbeln bei drei Gelegenheiten sicherstellen: beim Sterilisieren der Behälter, unmittelbar vor dem Abfüllen, und vor dem Verschließen, dank einer Ausrichtung von Dampfeinspritztüllen nach unten und tangential zur Wand des Gefäßes, wobei sich die Dampfeinspritztüllen an den Abfüllmitteln (23) und am Verschlusskopf (27) befinden.

## Claims

1. Method for continuously pasteurising or sterilising under deep vacuum, food products, in a rigid container, said container being a unit formed by a recipient and a cover, the closing of the recipient part of said container needing to be done by a metal cover, with no fastening means and provided with an elastic seal ensuring a connection between the recipient and the cover thanks to the vacuum, **characterised in that** it comprises the following steps:
- Degassing the product ready to be packaged;
- Pasteurising or sterilising the product;
- Cooling the product to reach the filling temperature;
- Sterilising and degassing recipients, a steam injection superheated to more than 130°C taking place in each recipient, then transferring said recipients under a first enclosure, without breaching sterility or introducing incondensable gases;
- A step during which the product is brought, dosed and filled in the recipients under said enclosure, the filling stopping when around the last centimetre of the recipient is reached, so as to leave a suitable space, of a sufficient volume such that at the proper time, and under certain conditions, the condensation of the superheated steam makes it possible to obtain the objective vacuum;
- Outlet of the recipient filled with food and steam from said first enclosure and inlet of said recipient filled with food and steam under a second insulated enclosure, also kept in a superheated steam atmosphere where the recipient is positioned awaiting the cover thereof;
- A step during which the covers coming from a tubular dispensing magazine, after having been disinfected beforehand or being disinfected during the dispensing are separated, dispensed, introduced in the second enclosure and each arranged on a recipient filled with food, said covers passing a superheated steam current through the path thereof, exiting the second enclosure towards the cover dispensing magazine;
- A step during which each cover is raised from the recipient thereof to inject, between them, superheated steam, an injection of steam being done towards the bottom and tangentially with respect to the wall of the recipient;
- A step during which the recipient and the cover are pressed against one another to put into contact the flexible seal of the cover with the rounded edge of the mouth of the recipient, this closing making it possible to completely insulate a space, named here "vacuum chamber", from the outside;
- Stopping the steam injection and cold water shower on the cover of the recipient to cool it and ensure the condensation of steam located in the vacuum chamber, which thus leads to a depression in the container, with respect to the atmospheric pressure, sufficient depression to guarantee that the recipient and the cover are securely sealed;
- Evacuating the container under vacuum towards a cooling tunnel where the cooling is continued, the cold shower needing to be continued for as long as the temperature in the product has not lowered below the cooking temperature of the food located at 68°C;
and **in that** the degassing ensured at the times of sterilising the recipients, filling the recipient and the closing thereof are done by injection of steam, superheated to more than 130°C by imposing a rotating movement of the steam in the spaces in question, of tourbillon or vortex type, capable of eliminating any trace of air in a very limited time and to replace it exclusively by the superheated steam, capable, during the cooling thereof and the condensation thereof, of leading to the putting of the container under said deep vacuum, the steam being injected at a temperature, a flow and for a suitable time, to make it possible to sterilise the zones in question.

2. Method according to one of the preceding claims, **characterised in that** it implements a homogenous boiling of the product, which makes it possible to continuously impose a homogenous cooling of the food in the containers already closed.

3. System for continuously pasteurising or sterilising under deep vacuum, food products, **characterised in that** it comprises:
- means (20) for degassing the loose product, these means being able to either be a system for putting under vacuum, or a cooking system naturally inducing the degassing, or a vacuum cooking system;
- means (21) for sterilising and degassing recipients using at least the superheated steam as an agent, this steam inducing at least one complete degassing inside the recipient;
- means for sterilising (22) and cooling (33) the loose product, said cooling means being placed at the outlet of said sterilisation means;
- means (24) for separating, disinfecting covers, using the superheated steam as a disinfection means, this steam inducing a degassing of the environment of the cover, which contributes to the degassing of all of the system;
- filling means (23) making it possible, possibly, for the evacuation of incondensable gases in the recipient, and making it possible, in any case, for the sterile dosing and sterile filling of food in the recipient, said filling means (23) being able to be installed in series on a filling chain (32);
- means (27) making it possible to handle the covers, to inject steam, to close recipients filled with food and to cool containers by cold shower, means also called "closing head";
- an enclosure (29), located upstream of all the closing system under vacuum and including a filling chain (32), and therefore located just in front of the inlet in the enclosure (28), and itself being connected hermetically with no possibility of air entering, said enclosure (29) needing to be under slight overpressure of superheated steam;
- an enclosure (28), kept in an optimal sterility state, by initial injection of superheated steam at the start of the process, then kept under steam, this enclosure including the whole area for exchanging covers and recipients filled between first, second, third and fourth carousels (1, 2, 3, 4), the steam escaping only up high through the inlet of the covers at the level of the tubular magazine and through the inlet and the outlet of the first and fourth carousels (1, 4);
- means for transferring recipients between the other means which guarantee the maintaining of the degassing and the sterile state of the products and recipients;
- means for limiting air entering into the enclosures (28 and 29) under superheated steam, like for example, flexible sleeves placed, coming from said enclosures;
and **in that** it comprises means ensuring the creation of three-time steam tourbillons or vortexes: during the sterilisation of the containers, just before the filling, and before the closing, thanks to an orientation of nozzles for injecting steam towards the bottom and tangentially with respect to the wall of the recipient, said steam injector nozzles being located on said filling means (23), and on said closing head (27).
